# EUROPEAN PATENT SPECIFICATION

(11) **EP 4 529 544 B1**
(45) Date of publication and mention of the grant of the patent: **18.03.2026**
(21) Application number: 23732783.8
(22) Date of filing: 16.05.2023
(51) Int. Cl.: C08G 77/08

(54) **POLYORGANOHYDROGENSILOXANE COMPOSITION INCLUDING A LEWIS ACIDIC MONOCATIONIC PHOSPHONIUM SALT**
POLYORGANOWASSERSTOFFSILOXANZUSAMMENSETZUNG MIT EINEM LEWIS-SAUREN MONOKATIONISCHEN PHOSPHONIUMSALZ
COMPOSITION DE POLYORGANOHYDROGÉNOSILOXANE COMPRENANT UN SEL DE PHOSPHONIUM MONOCATIONIQUE ACIDE DE LEWIS

(30) Priority: 15.06.2022 US 202263352315 P
(43) Date of publication of application: 02.04.2025
(73) Proprietor: DOW GLOBAL TECHNOLOGIES LLC, Midland, MI 48641-1967 (US); Dow Silicones Corporation, Midland, Michigan 48641-1967 (US)
(72) Inventor: MAAR, Ryan, Midland, Michigan 48667 (US); COURTEMANCHE, Marc-Andre, Midland, Michigan 48686-0994 (US); BEDARD, Anne-Catherine, Midland, Michigan 48667 (US)
(74) Representative: Elkington and Fife LLP
(86) International application number: PCT/US2023/067031
(87) International publication number: WO 2023/244889

(56) References cited:
- WO-A1-2020/247329

## Description

### TECHNICAL FIELD

A curable polyorganosiloxane composition and methods for the preparation and cure thereof is provided. More particularly, the curable polyorganosiloxane composition includes a monocationic Lewis acidic phosphonium salt (catalyst) and a polyorganohydrogensiloxane.

### INTRODUCTION

Silyl hydride (Si-H) and siloxane linkages (Si-O-Si) have been found to undergo a rearrangement reaction in the presence of a strong Lewis acid where a silicon from the siloxane linkage becomes bound to the hydrogen of the silyl hydride while the silicon of the silyl hydride becomes bound to the oxygen of the siloxane linkage. The silyl hydride and siloxane linkage that participate in the rearrangement reaction can be on the same molecule or can be on different molecules. This rearrangement reaction tends to be rapid in the presence of a strong Lewis acid. Such Lewis acid used as catalyst is disclosed for instance in WO 2020/247329 A1. Such a reaction can be useful for rapidly curing systems containing Si-H and siloxane linkages without requiring water or moisture. However, it requires a two-part system for storage where the Lewis acid catalyst is kept away from a combination of the silyl hydride and siloxane linkage until such time as curing is desired. It is desirable to be able to provide a shelf-stable one-component system that utilizes the rearrangement reaction that is shelf stable at room temperature, but that can be triggered with heating to cure.

### SUMMARY

A curable polyorganohydrogensiloxane composition (composition) comprises (A) a phosphonium catalyst and (B) a polyorganohydrogensiloxane. Methods for preparing and curing the composition are provided.

### DETAILED DESCRIPTION

The composition introduced above comprises (A) the phosphonium catalyst and (B) the polyorganohydrogensiloxane. The phosphonium catalyst comprises (i) a tetravalent monocation of phosphorus and (ii) a non-coordinating anion as claimed.

### Starting Material (A) Phosphonium Catalyst

Starting material (A) used herein is the phosphonium catalyst, which comprises (i) the tetravalent monocation of phosphorus and (ii) the non-coordinating anion. The tetravalent monocation of phosphorus is a Lewis acidic phosphorus cation of formula (i-1): [PR¹₃R²]⁺, where each R¹ is an independently selected halogenated aryl group, and each R² is independently selected from the group consisting of a halogen atom and an electron withdrawing group.

The halogenated aryl group R¹ may have formula: 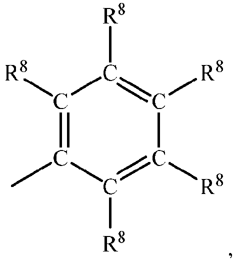 where each R⁸ is independently selected from H, X, and a group of formula -CX₃, where each X is an independently selected halogen; with the proviso that at least one R³ is not H. Each X may be independently selected from chlorine (Cl) or fluorine (F). Alternatively, each X may be F. Alternatively, each R⁸ may be independently selected from the group consisting of H, Cl, F, and a group of formula -CF₃, with the proviso that at least one R³ is Cl, F, or -CF₃.

The halogen atom for R² may be selected from the group consisting of bromine (Br), Cl, and F; alternatively Cl and F. Alternatively, the halogen atom for R² may be F. The electron withdrawing group for R² may comprise, bonded to P, an atom with an electronegativity ≥ 2.5, such as carbon (C) or oxygen (O). Alternatively, the electron withdrawing group may have formula -CX'₃, where X' is a halogen atom selected from Br, Cl, or F; alternatively Cl or F; and alternatively F. Alternatively, the electron withdrawing group for R² may have formula -CF₃. Alternatively, the electron withdrawing group for R ² may have formula -OR⁹, where R⁹ is alkyl or aryl. Suitable alkyl groups for R⁹ may be linear, branched, cyclic, or combinations of two or more thereof. The alkyl groups are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl, undecyl, and octadecyl (and branched isomers having 5 to 18 carbon atoms), and the alkyl groups are further exemplified by cycloalkyl groups such as cyclopropyl, cyclobutyl, cyclopentyl, and cyclohexyl. Suitable aryl groups for R⁹ may be monocyclic or polycyclic and may have pendant hydrocarbyl groups. For example, the aryl groups for R⁹ include phenyl, tolyl, xylyl, and naphthyl and further include aralkyl groups such as benzyl, 1-phenylethyl and 2-phenylethyl. Alternatively, the aryl group for R⁹ may be monocyclic, such as phenyl, tolyl, or benzyl; alternatively the aryl group for R⁹ may be phenyl.

Alternatively, in formula (i-1), each R¹ may be a fluorinated aryl group. Alternatively, in formula (i-1), R² may be F. Alternatively, (i) the tetravalent monocation of phosphorus may have formula: [P(C₆F₅)₃F]⁺.

In (A) the phosphonium catalyst, (ii) the anion is a non-coordinating as claimed. The non-coordinating anion is an anion of formula |BR³₄|⁻, where each R³ is independently selected from the group consisting of a monovalent hydrocarbon group and a monovalent halogenated hydrocarbon group. The monovalent hydrocarbon group may be an alkyl group or an aryl group. The monovalent halogenated hydrocarbon group may be an alkyl group or an aryl group where one or more hydrogen atoms has been replaced with F, Cl, or Br.

Suitable alkyl groups for R³ may be linear, branched, cyclic, or combinations of two or more thereof. The alkyl groups for R³ are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl, undecyl, and octadecyl (and branched isomers having 5 to 18 carbon atoms), and the alkyl groups are further exemplified by cycloalkyl groups such as cyclopropyl, cyclobutyl, cyclopentyl, and cyclohexyl. Suitable halogenated alkyl groups include chlorinated alkyl groups such as chloromethyl and chloropropyl groups; fluorinated alkyl groups such as fluoromethyl, difluoromethyl, trifluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; chlorinated cycloalkyl groups such as 2,2-dichlorocyclopropyl, 2,3-dichlorocyclopentyl; and fluorinated cycloalkyl groups such as 2,2-difluorocyclopropyl, 2,3-difluorocyclobutyl, 3,4-difluorocyclohexyl, and 3,4-difluoro-5-methylcycloheptyl.

Suitable aryl groups for R³ may be monocyclic or polycyclic and may have pendant hydrocarbyl groups. For example, the aryl groups for R³ include phenyl, tolyl, xylyl, and naphthyl and further include aralkyl groups such as benzyl, 1-phenylethyl and 2-phenylethyl. Alternatively, the aryl group for R³ may be monocyclic, such as phenyl, tolyl, or benzyl; alternatively the aryl group for R³ may be phenyl. The halogenated aryl group for R³ may be as described above for R¹.

Alternatively, (A) the catalyst may have formula:

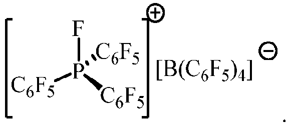

Starting material (A) may be prepared by methods known in the art, such as those disclosed in Science 2013, 341, 1374-1377 by varying appropriate starting materials. Starting material (A) used herein may be any one of the catalysts described above, or a combination of two or more of the catalysts described above.

The composition described herein contains a sufficient amount of (A) the catalyst to cure the composition. The exact amount of (A) the catalyst depends on various factors including the selection of (B) the polyorganohydrogensiloxane, and whether (C) the (non-functional) polyorganosiloxane is present. However, the composition may contain enough catalyst to provide a concentration of tetravalent monocation of phosphorus that may be at least 1 ppm, alternatively at least 2 ppm, alternatively at least 5 ppm; while at the same time the amount may be up to 1,000 ppm, alternatively up to 500 ppm, alternatively up to 100 ppm, and alternatively up to 50 ppm; each based on combined weights of starting materials (A) and (B) (and, when present (C)). Alternatively, the amount of (A) the phosphonium catalyst may be 1 ppm to 1,000 ppm, alternatively 2 ppm to 500 ppm, alternatively 5 ppm to 100 ppm, and alternatively 10 ppm based on weight of (B) the polyorganohydrogensiloxane, and when present, (C) the (non-functional) polyorganosiloxane in the composition.

### Starting Material (B) Polyorganohydrogensiloxane

The composition described herein further comprises (B) a polyorganohydrogensiloxane. The polyorganohydrogensiloxane comprises both Si-H and Si-O-Si moieties. Therefore, the composition comprising (A) the phosphonium catalyst and (B) the polyorganohydrogensiloxane may cure to form a gel when heated, without additional components. Without wishing to be bound by theory, it is thought that (A) the phosphonium catalyst catalyzes rearrangement reaction of Si-H and Si-O-Si moieties both within the (B) polyorganohydrogensiloxane to cure the composition.

The polyorganohydrogensiloxane has at least one Si-H moiety per molecule. Alternatively, the polyorganohydrogensiloxane may have more than one Si-H moiety per molecule, such as 2 Si-H moieties per molecule or 3 Si-H moieties per molecule, or even more.

The polyorganohydrogensiloxane may comprise two or more siloxane units selected from the group consisting of HR⁴₂SiO_{1/2}, R⁴₃SiO_{1/2}, HR⁴SiO_{2/2}, R⁴₂SiO_{2/2}, R⁴SiO_{3/2}, HSiO_{3/2} and SiO_{4/2} units; wherein each R⁴ is an independently selected monovalent hydrocarbon group, which is free of aliphatic unsaturation; with the proviso that at least one unit, per molecule, contains an Si-H moiety (i.e., at least one of HR⁴₂SiO_{1/2}, HR⁴SiO_{2/2}, and HSiO_{3/2} is present in the polyorganohydrogensiloxane). The monovalent hydrocarbon group, which is free of aliphatic unsaturation, may be an alkyl group or an aryl group, as described above for R³. Alternatively, each R⁴ may be an independently selected alkyl group. Alternatively, each R⁴ may be independently selected from the group consisting of methyl and phenyl. Alternatively, each R⁴ may be methyl.

Alternatively, (B) the polyorganohydrogensiloxane may be linear or cyclic. For example, (B) the polyorganohydrogensiloxane may be a linear polydiorganohydrogensiloxane comprising unit formula (B-1): (HR⁴₂SiO_{1/2})_{g}(R⁴₃SiO_{1/2})ₕ(R⁴₂SiO_{2/2})ᵢ(HR⁴SiO_{2/2})ⱼ, where R⁴ is as described above, and subscripts g, h, i, and j have values such that g ≥ 0, h ≥ 0, a quantity (g + h) = 2, i ≥ 0, j ≥ 0, and a quantity (g + j) ≥ 1, and a quantity (i + j) is 0 to 2,000. The quantity (i + j) may be 2,000 or less, alternatively 1,000 or less, alternatively 750 or less, alternatively 500 or less, alternatively 250 or less, alternatively 100 or less, and alternatively 50 or less; while at the same time, the quantity (i + j) may be 0 or more, alternatively 1 or more, alternatively 2 or more, alternatively 3 or more, alternatively 4 or more, alternatively 5 or more, alternatively 10 or more, alternatively 15 or more, and alternatively 20 or more. Alternatively (i + j) may be 0 to 1,000; alternatively 1 to 500; alternatively 2 to 250, and alternatively 3 to 100. Alternatively (i + j) may be 1 to 100. Alternatively, (i + j) may be 2 to 50. Alternatively, (i + j) may be 5 to 25. Alternatively, when g = 0 and h = 2, j ≥ 1 (alternatively ≥ 2). Alternatively, g may be 1, and h may be 1. Alternatively, g may be 2 and h may be 0. Alternatively, i may be 0 to 5, alternatively 1 to 4, alternatively 2 to 4, and alternatively 3 to 3.5. Alternatively, i may be 5 to 25. Alternatively, j may be 1 to 10, alternatively 2 to 9, alternatively 3 to 8, alternatively 4 to 7, and alternatively 5 to 6. Alternatively, when g > 0, then j may be 0.

Suitable linear polydiorganohydrogensiloxanes for use herein are exemplified by:
(i) α,ω-dimethylhydrogensiloxy-terminated poly(dimethylsiloxane/methylhydrogensiloxane),
(ii) α,ω-dimethylhydrogensiloxy-terminated polymethylhydrogensiloxane,
(iii) α,ω-trimethylsiloxy-terminated poly(dimethylsiloxane/methylhydrogensiloxane),
(iv) α,ω-trimethylsiloxy-terminated polymethylhydrogensiloxane, and
(v) α-dimethylhydrogensiloxy-ω-trimethylsiloxy-terminated poly(dimethylsiloxane/methylhydrogensiloxane),
(vi) α-dimethylhydrogensiloxy-ω-trimethylsiloxy-terminated polymethylhydrogensiloxane,
(vii) a combination of two or more thereof.

Alternatively, the polyorganohydrogensiloxane may be cyclic. The cyclic polydiorganohydrogensiloxane may comprise unit formula (B-2): (R⁴₂SiO_{2/2})ᵤ(R⁴HSiO_{2/2})ᵥ, where R⁴ is as described above, subscript u is 0 or more, subscript v is 1 or more, a quantity (u + v) is 3 to 15. Alternatively u may be 0. Alternatively, u may be 0 or more, alternatively 1 or more, alternatively 2 or more, alternatively 3 or more; while at the same time u may be up to 6, alternatively up to 5, and alternatively up to 4. Alternatively, u may be 0 to 6, alternatively 0 to 4, alternatively 0 to 2, and alternatively 1 to 6. Alternatively, v may be 1 or more, alternatively 2 or more, alternatively 3 or more, and alternatively 4 or more; while at the same time, v may be 12 or less, alternatively 10 or less, alternatively 8 or less, alternatively 6 or less, and alternatively 5 or less. Alternatively, v may have an average value of 4. Alternatively, v may be 1 to 12, alternatively 2 to 10, alternatively 3 to 8, alternatively 3 to 6, and alternatively 3 to 5. In unit formula (B-2), each R⁴ may be methyl. Examples of cyclic polyorganohydrogensiloxanes include (i) trimethylcyclotrisiloxane, (ii) tetramethylcyclotetrasiloxane, (iii) pentamethylcyclopentasiloxane, (iv) hexamethylcyclohexasiloxane, and (v) combinations of two or more thereof.

Suitable polyorganohydrogensiloxanes are known in the art and are commercially available. For example, DOWSIL^{™} 6-3570 Polymer, DOWSIL^{™} SH 1107 Fluids and XIAMETER^{™} MHX-1107 Fluids are available from The Dow Chemical Company of Midland, Michigan, USA. Polydiorganohydrogensiloxanes such as HMS-992 (trimethylsilyl terminated polymethyhydrosiloxane), HMS-HM271 (hydride-terminated methylhydrosiloxane - dimethylsiloxane copolymer), and HMS-031 (trimethylsiloxy-terminated methyhydrosiloxane dimethylsiloxane copolymer) are available from Gelest, Inc. of Morrisville, Pennsylvania, USA. Other polydiorganohydrogensiloxanes available from Gelest include HMS-H271, HMS-071, HMS-993; HMS-301 and HMS-301 R, HMS-991, HMS-993, HMS-082, HMS-151, HMS-013, HMS-053, HAM-301 (which is octyl functional), and HPM-502 (which is phenyl functional). Methods of preparing linear and branched polyorganohydrogensiloxanes suitable for use herein, such as hydrolysis and condensation of organohalosilanes, are well known in the art, as exemplified in U.S. Patent 3,957,713 to Jeram et al.; U.S. Patent 4,329,273 to Hardman, et al.; U.S. Patent 4,370,358 to Hayes, et al.; U.S. Patent 4,707,531 to Shirahata; U.S. Patent 5,310,843 to Morita; and U.S. Patent 2,823,218 to Speier, et al., which discloses organohydrogensiloxane oligomers and linear polymers as well as cyclic polymethyhydrogensiloxanes.

The amount of (B) the polyorganohydrogensiloxane in the composition depends on various factors including the Si-H content of the polyorganosiloxane (which may be determined using quantitative infra-red analysis in accordance with ASTM E168), and any optional, additional starting materials are present. However, the amount of polyorganohydrogensiloxane may be 1 wt% or more, alternatively 5 wt% or more, alternatively 10 wt% or more, alternatively 20 wt% or more, alternatively 30 wt% or more, alternatively 40 wt% or more, alternatively 50 wt% or more, alternatively 60 wt% or more, alternatively 70 wt% or more, alternatively 80 wt% or more, alternatively 90 wt% or more, alternatively 95 wt% or more, and alternatively 99 wt% or more, while at the same time the amount of polyorganohydrogensiloxane may be < 100 wt%, alternatively 99.9 wt% or less, alternatively 99.5 wt% or less, alternatively 99.1 wt% or less, alternatively 95 wt% or less, alternatively 90 wt% or less, alternatively 85 wt% or less, alternatively 80 wt% or less; each based on combined weight of starting materials (A), (B), and (C) in the composition. Alternatively, the amount of polyorganohydrogensiloxane may be 1 wt% to < 100 wt%, alternatively 5 wt% to < 100 wt%, alternatively 10 wt% to 99.9 wt%, on the same basis.

Alternatively, in addition to (B) the polyorganohydrogensiloxane, the composition may further comprise (C) a polyorganosiloxane that is free of Si-H moieties that may serve as a source of Si-O-Si moieties in the curing reaction for the composition.

### Starting Material (C) Polyorganosiloxane

Starting material (C) is an optional polyorganosiloxane that is free of Si-H moieties. The polyorganosiloxane comprises two or more siloxane units selected from R⁴₃SiO_{1/2}, R⁴₂SiO_{2/2}, R⁴SiO_{3/2}, and SiO_{4/2} units; wherein each R⁴ is an independently selected monovalent hydrocarbon group, which is free of aliphatic unsaturation. The monovalent hydrocarbon group, which is free of aliphatic unsaturation, may be an alkyl group or an aryl group.

Suitable alkyl groups for R⁴ may be linear, branched, cyclic, or combinations of two or more thereof. The alkyl groups are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl, undecyl, and octadecyl (and branched isomers having 5 to 18 carbon atoms), and the alkyl groups are further exemplified by cycloalkyl groups such as cyclopropyl, cyclobutyl, cyclopentyl, and cyclohexyl. Suitable halogenated alkyl groups include chlorinated alkyl groups such as chloromethyl and chloropropyl groups; fluorinated alkyl groups such as fluoromethyl, difluoromethyl, trifluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; chlorinated cycloalkyl groups such as 2,2-dichlorocyclopropyl, 2,3-dichlorocyclopentyl; and fluorinated cycloalkyl groups such as 2,2-difluorocyclopropyl, 2,3-difluorocyclobutyl, 3,4-difluorocyclohexyl, and 3,4-difluoro-5-methylcycloheptyl.

Suitable aryl groups for R⁴ may be monocyclic or polycyclic and may have pendant hydrocarbyl groups. For example, the aryl groups for R³ include phenyl, tolyl, xylyl, and naphthyl and further include aralkyl groups such as benzyl, 1-phenylethyl and 2-phenylethyl. Alternatively, the aryl group for R⁴ may be monocyclic, such as phenyl, tolyl, or benzyl; alternatively the aryl group for R⁴ may be phenyl. The halogenated aryl group for R⁴ may have formula: 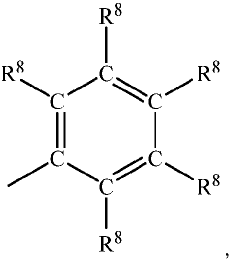 where each R⁸ is independently selected from H, X, and a group of formula -CX₃, where each X is an independently selected halogen; with the proviso that at least one R⁸ is not H. Each X may be independently selected from Cl or F. Alternatively, each X may be F. Alternatively, each R⁸ may be independently selected from the group consisting of H, Cl, F, and a group of formula -CF₃, with the proviso that at least one R⁸ is Cl, F, or -CF₃. Alternatively, each R⁴ may be an independently selected alkyl group. Alternatively, each R⁴ may be independently selected from the group consisting of methyl and phenyl. Alternatively, each R⁴ may be methyl.

Starting material (C) the polyorganosiloxane may be a polydiorganosiloxane, which may be linear or cyclic. For example, starting material (C) may be a linear polydiorganosiloxane comprising unit formula (C-1): (R⁴₃SiO_{1/2})₂(R⁴₂SiO_{2/2})ₓ, where R⁴ is as described above, and 1,000 ≥ x ≥ 1. Alternatively, subscript x may be at least 1, alternatively at least 2, alternatively at least 3, alternatively at least 5, alternatively at least 10, alternatively at least 25; while at the same time subscript x may be up to 1,000, alternatively up to 500, alternatively up to 250, alternatively up to 100, and alternatively up to 50. Alternatively, subscript x may have a value such that 500 ≥ x ≥ 1, alternatively 250 ≥ x ≥ 2, alternatively 100 ≥ x ≥ 5, alternatively 50 ≥ x ≥ 10, and alternatively 50 ≥ x ≥ 25.

Suitable linear polydiorganosiloxanes for use herein are exemplified by:
(i) α,ω-trimethylsiloxy-terminated polydimethylsiloxane,
(ii) α,ω-dimethylphenylsiloxy-terminated poly(dimethylsiloxane/methylphenylsiloxane),
(iii) α,ω-dimethylphenylsiloxy-terminated polymethylphenylsiloxane,
(iv) α,ω-trimethylsiloxy-terminated poly(dimethylsiloxane/methylphenylsiloxane),
(v) α,ω-trimethylsiloxy-terminated polymethylphenylsiloxane, and
(vi) a combination of two or more thereof.

Polydiorganosiloxanes are known in the art and are commercially available. For example, DOWSIL^{™} 200 Fluids, DOWSTL^{™} OS Fluids, and XIAMETER^{™} PMX-200 Silicone Fluids are commercially available from The Dow Chemical Company of Midland, Michigan, USA.

Alternatively, (C) the polyorganosiloxane may be a cyclic polydiorganosiloxane comprising unit formula (C-2): (R⁴₂SiO_{2/2})_{y}, where R⁴ is as described above, and 15 ≥ y ≥ 3. Alternatively, subscript y may be at least 3, alternatively at least 4, alternatively at least 5, and alternatively at least 6; while at the same time, subscript y may be up to 15, alternatively up to 12, alternatively up to 10, alternatively up to 8, and alternatively up to 6. Alternatively, subscript y may have a value such that 12 ≥ y ≥ 3, alternatively 10 ≥ y ≥ 3, alternatively 8 ≥ y ≥ 3, alternatively 6 ≥ y ≥ 3, and alternatively 6 ≥ y ≥ 4.

Examples of cyclic polydiorganosiloxanes include hexamethylcyclotrisiloxane, octamethylcyclotetrasiloxane, decamethylcyclopentasiloxane, dodecamethylcyclohexasiloxane, and a combination of two or more thereof. These cyclic polydiorganosiloxanes are commercially available, e.g., from Sigma-Aldrich, Inc. of St. Louis, Missouri, USA.

Starting material (C) is optional. However, when present, the amount of starting material (C) depends on various factors including the type of polyorganohydrogensiloxane selected for starting material (B) and its Si-H content. The amount of (C) the polyorganosiloxane may be 0 to < 99 wt % based on combined weight of starting materials (A), (B), and (C) in the composition.

### Starting Material (D) Solvent

Starting material (D) is an optional solvent, which may be used to facilitate combination of starting materials (A) and (B), and, when present (C), in the composition and method described herein. Solvents used herein are those that help fluidize the starting materials, but essentially do not react with any of these starting materials. Solvent may be selected based on solubility of the starting materials and volatility of the solvent. The solubility refers to the solvent being sufficient to dissolve and/or disperse the starting materials. Volatility refers to vapor pressure of the solvent. For example, starting material (A), the phosphonium catalyst, may be dissolved in a solvent before combining starting material (A) with starting material (B) (and when present (C)). Alternatively, starting material (B) may be dissolved in a solvent before combining with starting material (A) (and (C), when present) when starting material (B) is a viscous fluid, such as a gum, or a solid at RT, such as a resin. Alternatively, starting material (C) may be dissolved in a solvent before combining with starting materials (A) and (B), e.g., when starting material (C) is a solid at RT, such as a resin or a gum. The solvent may be used in any amount, which will be selected by one of skill in the art, depending on various factors, such as the selection of starting materials (A) and (B) (and when present (C)) and their solubilities.

Suitable solvents may be hydrocarbons. Suitable hydrocarbons include aromatic hydrocarbons such as benzene, toluene, or xylene; and/or aliphatic hydrocarbons such as heptane, hexane, or octane. Alternatively, the solvent may be a halogenated hydrocarbon such as chloroform, 1,1,1-trichloroethane or methylene chloride. One solvent, or a combination comprising two or more solvents, may be used herein.

The amount of solvent can depend on various factors including the type of solvent selected and the amounts and types of other starting materials selected. However, the amount of solvent may be 0.1 wt% or more, alternatively 2 wt% or more, while at the same time the amount of solvent may be up to 99 wt%, alternatively up to 50 wt%, based on combined weights of starting materials (A), (B), and (C). Alternatively, the amount of (D) the solvent may be 0.1 wt% to 99 wt%, alternatively 2 wt% to 50 wt%, based on combined weights of (A) the catalyst, (B) the polyorganohydrogensiloxane, and (C) the polyorganosiloxane compound in the composition.

The composition can consist of (A) the phosphonium catalyst and (B) the polyorganohydrogensiloxane (and when present, (C) the polyorganosiloxane and/or (D) the solvent). Alternatively, the composition described herein may optionally further comprise an additional component. An optional additional component may be present at a concentration of 50 wt% or less, 40 wt% or less, 30 wt% or less, 20 wt% or less, 10 wt% or less, 5 wt% or less, or even one wt% or less based on composition weight. Alternatively, an optional additional component may be present at a concentration of 0 to 50 wt%, alternatively 0 to 40 wt%, alternatively 0 to 30 wt%, alternatively 0 to 20 wt%, alternatively 0 to 10 wt%, alternatively 0 to 5 wt%, and alternatively 1 wt% to 30 wt%.

### Optional Additional Components

Examples of possible optional components include one or a combination of more than one component selected from a group consisting of pigments such as carbon black or titanium dioxide, fillers such as metal oxides including SiO₂ (e.g., at a concentration of 50 wt% or less based on composition weight), moisture scavengers, fluorescent brighteners, stabilizers (such as antioxidants and ultraviolet stabilizers), and corrosion inhibitors. The composition alternatively can be free of any one or any combination of more than one such additional components. In addition, the composition can contain one wt% or less, alternatively 0.5 wt% or less water relative to composition weight. Alternatively, the composition may be free of water.

The composition described herein may be free of transition metals. "Free of transition metals" means that the composition contains none, or a non-detectable amount, or an amount insufficient to gel the composition at room temperature after 24 hours, of a metal in Groups 4-12 of the IUPAC Periodic Table of the Elements dated 1 December 2018. Without wishing to be bound by theory, it is thought that transition metals may catalyze reaction of Si-H and Si-O moieties, at an undesirably low temperature (e.g., < 65 °C).

The composition described herein may be free of Lewis base. "Free of Lewis base" means that the composition contains none or an insufficient amount of a compound or ionic species, that can donate an electron pair to (A) the phosphonium catalyst, to prevent the composition from sufficiently curing to form a gel within 20 minutes when heated at 65 °C. For example, the composition may be free of a Lewis base selected from a group consisting of the following bases: PR¹⁰₃, P(NR¹⁰₂)₃, NR¹⁰₃, N(SiR¹⁰₃)ₓR¹⁰₃₋ₓ, R¹⁰C(NR¹⁰)N, P(N-R¹⁰)R¹⁰₃ , guanidines (C(=NR¹⁰)(NR¹⁰₂)₂), amidines (R¹⁰C(=NR¹⁰)NR¹⁰₂), phosphazenes, and 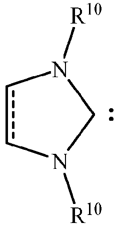 ; where R¹⁰ is in each occurrence independently selected from a group consisting of hydrogen, alkyl, substituted alkyl, aryl and substituted aryl.

### Method

The composition described above may be a one part composition. The one part composition contains starting materials (A) and (B) in the same part. The composition may be prepared in a method, which comprises step: i) combining starting materials comprising (A) the phosphonium catalyst, (B) the polyorganohydrogensiloxane, and when present (C) the polyorganosiloxane, (D) the solvent, and/or the optional additional component, described above, thereby forming a mixture. Starting material (D) the solvent may be used to facilitate combining starting materials (A) and (B), and when present (C). For example, one or more of starting materials (A) and (B), and when present (C), may be dissolved in the solvent before being mixed with the other starting materials. Alternatively, the starting materials in may consist essentially of starting materials (A) and (B) (and optionally (C) and/or (D)), described above. Alternatively, the starting materials may consist of starting materials (A) and (B) (and optionally (C) and/or (D)), described above.

Combining the starting materials to form the mixture and prepare the polyorganohydrogensiloxane composition is performed under conditions that will not cure (e.g., not significantly react the Si-H moieties from (B) the polyorganohydrogensiloxane and the Si-O-Si moieties (from (B) the polyorganohydrogensiloxane and/or (C) the polyorganosiloxane). These conditions may comprise mixing, e.g., by any convenient means. Mixing may be performed using conventional mixing equipment, such as an agitated batch kettle. Alternatively, when the polyorganosiloxane selected for starting material (C) and/or the polyorganohydrogensiloxane selected for starting material (B) is viscous or solid (e.g., gum or resin), mixing under shear may be performed, e.g., with an extruder. The composition may be formed, e.g., by mixing starting materials comprising (A) and (B) described above. Starting materials (A) and (B) may be combined at RT or less. Alternatively, the temperature for combining starting materials (A) and (B) (and (C) and/or (D), when present) may be 5 °C to 30 °C. Starting materials (A) and (B), (and (C) and/or (D), when present) may be combined concurrently. Alternatively, starting materials (A) and (B) (and (D), when present) may be combined to form a mixture, and thereafter the mixture may be combined with starting material (C) (and additional (D), when present), e.g., by adding starting material (C) (or a solvent solution thereof) to said mixture, e.g., by metering over a period of time or by adding in one or more aliquots.

### Curing the Composition

A method for curing the composition comprises:
1) providing the composition, as described above, and
2) heating the composition to a temperature sufficient to catalyze reaction of silicon bonded hydrogen atoms in (B) the polyorganohydrogensiloxane. For example, the temperature in step 2) may be ≥ 65 °C. Alternatively, the temperature may be > 30 °C, but the time for reaction may be longer at lower temperatures than at higher temperatures. The method for curing the composition may optionally further comprise an additional step. For example, the method may further comprise an additional step after step 1) and before step 2), wherein the additional step comprises placing the composition in a mold or applying the composition on a substrate.

### EXAMPLES

These examples are provided to illustrate the invention to one skilled in the art and are not to be construed as limiting the scope of the invention set forth in the claims. Starting materials used in these examples are shown in Table 1.

**Table 1 - Starting Materials**

| Ingredient Type | Product Name | Chemical Description, Chemical formula, or Structure | Source |
|---|---|---|---|
| Reagent 1 | D^{H}*ₓ* | Cyclic polymethylhydrogensiloxane with density 0.98 g/ml, and formula | The Dow Chemical Company |
| | | 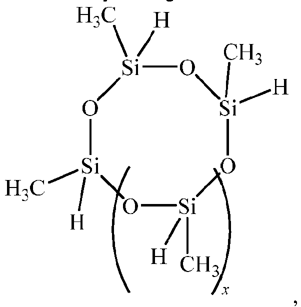 | |
| | | where subscript x is 1 to 3 | |
| Catalyst 1 | [P(C₆F₅)₃F]⁺[B(C₆F₅)₄]⁻ | 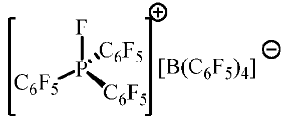 | Prepared at The Dow Chemical Company according to Science 2013,341, 1374-1377. |
| Catalyst 2 | [P(C₆F₅)₃F]⁺F⁻ | 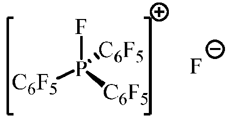 | Prepared at The Dow Chemical Company according to Science 2013, 341, 1374-1377. |
| FAB (comparative catalyst) | (C₆F₅)₃B | tris(pentafluorophenyl)borane | Sigma-Aldrich |
| Solvent | Dichloromethane | CH₂Cl₂ | Sigma-Aldrich |
| Et₃N | Triethylamine | N(CH₂CH₃)₃ | Sigma-Aldrich |

### Reference Example 1 - General Conditions

The reactions were carried out in an N₂-filled glovebox using solvents that were dried over 4 Å molecular sieves. Except as specified in Table 1, all starting materials were obtained from commercial sources and used as received.

Catalyst Stock Solutions were prepared as follows:
[(C₆F₅)₃PF][B(C₆F₅)₄] stock solution A: [(C₆F₅)₃PF][B(C₆F₅)₄] (2.2 mg) was dissolved in CH₂Cl₂ (5 mL) to afford [(C₆F₅)₃PFHB(C₆F₅)₄] stock solution A (0.44 mg / mL).

[(C₆F₅)₃PF][F] stock solution A': [P(C₆F₅)₃F⁺]F⁻ (6.6 mg) was dissolved in CH₂Cl₂ (15 mL) to afford [P(C₆F₅)₃F⁺]F⁻ stock solution A' (0.44 mg / mL).

[(C₆F₅)₃PF][B(C₆F₅)₄] + NEt₃ stock solution A: Et₃N was added in a 1:1 molar ratio with Catalyst 1. The Et₃N stock solution (49.9 uL Et₃N in 1 mL CH₂Cl₂) was added first to the reaction mixture, followed by the catalyst stock solution A (0.44 mg/mL).

FAB stock solution A: FAB (2.6 mg) was dissolved in CH₂Cl₂(5.8 mL) to afford FAB stock solution A (0.44 mg / mL).

### Reference Example 2 - Working Examples Reaction Setup & Progress using Catalyst 1 at r.t.

D^{H}*ₓ* (1 mL, 0.98 g) was added to a 30 mL vial containing a magnetic stir bar. To this vial was added 0.2 mL of [(C₆F₅)₃PF][B(C₆F₅)₄] stock solution A (0.088 mg of [(C₆F₅)₃PF][B(C₆F₅)₄]). The solution was stirred at room temperature. The reaction was monitored at different time intervals to see if a gel had formed. Gel formation was indicative of crosslinking (curing). No effort was made to remove the cured material from the vial. The results are shown below in Table 2.

### Reference Example 3 - Comparative Example Reaction Setup & Progress

Reference Example 2 was repeated, except 0.2 mL of FAB stock solution A (0.088 mg of FAB) was used. The results are shown below in Table 2.

### Reference Example 4 - Comparative Example Reaction Setup & Progress

Reference Example 2 was repeated, except 0.2 mL of [(C₆F₅)₃PF][B(C₆F₅)₄] stock solution A (0.088 mg of [(C₆F₅)₃PF][B(C₆F₅)₄] + 0.2 mL of NEt₃ stock solution (1:1 molar ratio with Catalyst 1)) was used. The results are shown below in Table 2.

### Reference Example 5 - Comparative Example Reaction Setup & Progress

Reference Example 2 was repeated, except 0.2 mL of [(C₆F₅)₃PF][F] stock solution A (0.088 mg of [(C₆F₅)₃PF][F]) was used. The results are shown below in Table 2.

### Reference Example 6 - Working Examples Reaction Setup & Progress using Catalyst 1 at 65 °C

D^{H}*ₓ* (1 mL, 0.98 g) was added to a 30 mL vial containing a magnetic stir bar. To this vial was added 0.5 mL of [(C₆F₅)₃PF][B(C₆F₅)₄] stock solution A (0.22 mg of [(C₆F₅)₃PF][B(C₆F₅)₄]). The reaction was monitored at different time intervals to see if a gel had formed. The solution was held at room temperature. And thereafter, the solution was stirred at 65 °C via a pre-heated aluminum block. Gel formation was indicative of crosslinking (curing). No effort was made to remove the cured material from the vial. The results are shown below in Table 2.

### Reference Example 7 - Comparative Example Reaction Setup & Progress

Reference Example 6 was repeated, except 0.5 mL of [(C₆F₅)₃PF][B(C₆F₅)₄] stock solution A (0.22 mg of [(C₆F₅)₃PF][B(C₆F₅)₄] + 0.5 mL of NEt₃ stock solution (1:1 molar ratio with catalyst 1)) was used. The results are shown below in Table 2.

### Reference Example 8 - Comparative Example Reaction Setup & Progress

Reference Example 6 was repeated, except 0.5 mL of [(C₆F₅)₃PF][F] stock solution A (0.22 mg of [(C₆F₅)₃PF][F]) was used. The results are shown below in Table 2.

**Table 2 - Curing of D^{H}ₓ using FAB (comparative) vs. catalyst 1 (inventive) and catalyst 2 (comparative).**

| Example | Stock solution conc. | Amount of stock added | D^{H}*ₓ* (mL) | CAT loading vs. D^{H}*ₓ* (ppm) | Observations |
|---|---|---|---|---|---|
| Ref. Ex. 2 (Inventive) Catalyst 1 | 0.44 mg/mL (CH₂Cl₂) | 0.2 mL (0.088 mg of 1) | 1 | 90 | No gel after 24 h at r.t. |
| | | | | | Gel at r.t. after > 24 h¹ |
| Ref. Ex. 3 (Comparative) FAB | 0.44 mg/mL (CH₂Cl₂) | 0.2 mL (0.088 mg of FAB) | 1 | 90 | Gel at r.t. after 20 min |
| Ref. Ex. 4 (Comparative) Catalyst 1+Et₃N | 0.44 mg/mL (CH₂Cl₂) | 0.2 mL (0.088 mg of 1) | 1 | 90 | No gel at r.t. >24h |
| Ref. Ex. 5 (Comparative) Catalyst 2 | 0.44 mg/mL (CH₂Cl₂) | 0.2 mL (0.088 mg of 2) | 1 | 90 | No gel at r.t. >24h |
| Ref. Ex. 6 (Inventive) Catalyst 1 | 0.44 mg/mL (CH₂Cl₂) | 0.5 mL (0.22 mg of 1) | 1 | 224 | No gel at r.t. after 1 h |
| | | | | | Gel at 65 °C after 20 min |
| Ref. Ex. 7 (Comparative) Catalyst 1+Et₃N | 0.44 mg/mL (CH₂Cl₂) | 0.5 mL (0.22 mg of 1) | 1 | 224 | No gel at r.t. 1 h and no gel at 65 °C 20 min |
| Ref. Ex. 8 (Comparative) Catalyst 2 | 0.44 mg/mL (CH₂Cl₂) | 0.5 mL (0.22 mg of 2) | 1 | 224 | No gel at r.t. 1 h and no gel at 65 °C 20 min |

| | | | | | |
|---|---|---|---|---|---|
| 1 There was no gel after 24 h at r.t. Subsequently, the solution sat over a 4 day holiday weekend when no one was present, and a gel was observed to have formed when observations resumed. | | | | | |

The data in Table 2 for Reference Examples 2 and 6 show that the phosphonium catalyst comprising a tetravalent monocation of phosphorus and a non-coordinating anion can be used to prepare a one part composition that is stable (not gelling) for at least 1 day at r.t., but that cures in 20 minutes at elevated temperature of 65 °C. Reference Examples 4 and 7 showed that the presence of a Lewis base (triethyl amine) prevented curing under the conditions tested. Reference Examples 5 and 8 show that catalyst 2, which included a strongly coordinating anion, did not cure the composition when tested at 65 °C. Reference Example 3 shows the rapid cure at room temperature when FAB was used instead of the catalyst described herein.

### Industrial Applicability

The composition described above is shelf stable, which means that the composition does not gel at RT in 1 hour or less, alternatively 5 hours or less, alternatively 24 hours or less, alternatively 48 hours or less, and alternatively 36 hours or less. The composition and method described herein are useful for preparing and curing silicone compositions that cure to form products such as coatings, adhesives, elastomers, and foams. The inventors surprisingly found that the catalyst described herein will cure the polyorganosiloxane composition. Furthermore, the inventors surprisingly found that there is no need for a Lewis base and/or a bridging molecule to stabilize the catalyst described herein. In contrast, the presence of a Lewis base such as triethylamine, can render the present composition incurable under the conditions tested in the examples above. The composition and method of this invention provide a polyorganohydrogensiloxane composition that is shelf stable at RT and that is curable with heating to mild temperatures.

### Definitions and Usage of Terms

Abbreviations used in the specification have the definitions in Table 3, below.

**Table 3 - Abbreviations**

| Abbreviation | Definition |
|---|---|
| ASTM | ASTM International |
| °C | degrees Celsius |
| g | grams |
| GPC | gel permeation chromatography |
| h | hours |
| Me | methyl |
| mg | milligrams |
| min | minutes |
| mL | milliliters |
| mmol | millimoles |
| Ph | phenyl |
| ppm | parts per million |
| RT or r.t. | room temperature of 23 °C ± 2 °C |
| s | seconds |
| wt | weight |

All amounts, ratios, and percentages are by weight unless otherwise indicated. The amounts of all starting materials in a composition total 100% by weight. The SUMMARY and ABSTRACT are hereby incorporated by reference. The articles 'a', 'an', and 'the' each refer to one or more, unless otherwise indicated by the context of specification. The singular includes the plural unless otherwise indicated.

The term "comprising" and derivatives thereof, such as "comprise" and "comprises" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

Generally, as used herein a hyphen "-" or dash "-" in a range of values is "to" or "through"; a ">" is "above" or "greater-than"; a "≥" is "at least" or "greater-than or equal to"; a "<" is "below" or "less-than"; and a "≤*"* is "at most" or "less-than or equal to."

## Claims

1. A composition comprising a mixture of (A) a phosphonium catalyst comprising (i) a tetravalent monocation of phosphorus and (ii) a non-coordinating anion of formula [BR³₄]⁻ , where each R³ is independently selected from the group consisting of a monovalent hydrocarbon group and a monovalent halogenated hydrocarbon group; and (B) a polyorganohydrogensiloxane; wherein the composition is free of Lewis base.

2. The composition of claim 1, where (i) the tetravalent monocation of phosphorus is a Lewis acidic phosphorus cation of formula [PR¹₃R²]⁺, where each R² is independently selected from the group consisting of X', -CX'₃ , and -OR⁹, where each X' is independently selected from the group consisting of Br, Cl, and F, and R⁹ is an alkyl group or an aryl group; and each R¹ is an independently selected halogenated aryl group.

3. The composition of claim 2, where (i) the tetravalent monocation of phosphorus has formula

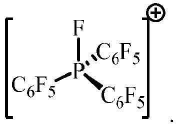

4. The composition of any one of claim 1 to 3, where (ii) the non-coordinating anion has formula [BR³₄]^{-,} where each R³ is a halogenated aryl group.

5. The composition of claim 4, where (ii) the anion has formula B(C₆F₅)₄⁻.

6. The composition of any one of claims 1 to 3, where (A) the phosphonium catalyst has formula:

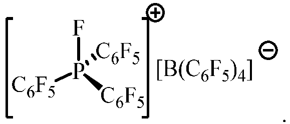

7. The composition of any one of claims 1 to 6, where (B) the polyorganohydrogensiloxane comprises two or more siloxane units selected from the group consisting of HR⁴₂SiO_{1/2}, R⁴₃SiO_{1/2}, HR⁴SiO_{2/2}, R⁴₂SiO_{2/2}, R⁴SiO_{3/2}, HSiO_{3/2} and SiO_{4/2} units; wherein each R⁴ is an independently selected monovalent hydrocarbon group, which is free of aliphatic unsaturation.

8. The composition of claim 7, where (B) the polyorganohydrogensiloxane is selected from the group consisting of:
(B-1) a linear polydiorganohydrogensiloxane comprising unit formula (HR⁴₂SiO_{1/2})_{g}(R⁴₃SiO_{1/2})ₕ(R⁴₂SiO_{2/2})ᵢ(HR⁴SiO_{2/2})ⱼ, where R⁴ is as described above, and subscripts g, h, i, and j have values such that g ≥ 0, h ≥ 0, a quantity (g + h) = 2, i ≥ 0, j ≥ 0, and a quantity (g + j) ≥ 1, and a quantity (i + j) is 0 to 1,000;
(B-2) a cyclic polydiorganohydrogensiloxane comprising unit formula (R⁴₂SiO_{2/2})ᵤ(R⁴HSiO_{2/2})ᵥ, where subscript u is 0 or more, subscript v is 1 or more, a quantity (u + v) is 3 to 15, and each R is an independently selected monovalent hydrocarbon group; and
(B-3) a combination of both (B-1) and (B-2).

9. The composition of any one of claims 1 to 8, further comprising (C) a polyorganosiloxane, wherein (C) the polyorganosiloxane comprises two or more siloxane units selected from R⁴₃SiO_{1/2}, R⁴₂SiO_{2/2}, R⁴SiO_{3/2}, and SiO_{4/2} units; wherein each R⁴ is an independently selected monovalent hydrocarbon group, which is free of aliphatic unsaturation.

10. The composition of claim 9, where (C) the polyorganosiloxane is selected from the group consisting of
(C-1) a linear polydiorganosiloxane comprising unit formula: (R⁴₃SiO_{1/2})₂(R⁴₂SiO_{2/2})ₓ, where R⁴ is as described above, and 1,000 ≥ x ≥ 1;
(C-2) a cyclic polydiorganosiloxane comprising unit formula: (R⁴₂SiO_{2/2})_{y}, where R⁴ is as described above, and 15 ≥ y ≥ 3; and
(C-3) a combination of both (C-1) and (C-2).

11. The composition of any one of claims 1 to 10, where an amount of (A) the phosphonium catalyst is 1 ppm to 1,000 ppm, based on weight of (B) the polyorganohydrogensiloxane, and when present, (C) the polyorganosiloxane.

12. The composition of any one of claims 1 to 11, further comprising (D) a solvent.

13. The composition of any one of claims 1 to 12, further comprising one or a combination of more than one component selected from a group consisting of pigments, fillers, moisture scavengers, fluorescent brighteners, stabilizers, and corrosion inhibitors.

14. The composition of any one of claims 1 to 13, where the composition is free of transition metals.

15. A method comprising the steps of:
1) providing a composition according to any one of claims 1 to 14, and
2) heating the composition to a temperature sufficient to catalyze reaction of silicon bonded hydrogen atoms in (B) the polyorganohydrogensiloxane; and
optionally placing the composition in a mold or applying the composition on a substrate after step 1) and before step 2).

## Patentansprüche

1. Zusammensetzung, umfassend eine Mischung aus (A) einem Phosphoniumkatalysator, der (i) ein tetravalentes Monokation von Phosphor und (ii) ein nicht-koordinierendes Anion der Formel [BR³_{4]}⁻ umfasst, wobei jedes R³ unabhängig voneinander ausgewählt ist aus der Gruppe, die aus einer monovalenten Kohlenwasserstoffgruppe und einer monovalenten halogenierten Kohlenwasserstoffgruppe besteht; und (B) einem Polyorganohydrogensiloxan; wobei die Zusammensetzung frei von Lewis-Base ist.

2. Zusammensetzung von Anspruch 1, wobei (i) das tetravalente Monokation von Phosphor ein Lewis-saures Phosphorkation der Formel [PR¹₃R²]⁺ ist, wobei jedes R² unabhängig voneinander ausgewählt ist aus der Gruppe, die aus X', -CX'₃ und -OR⁹ besteht, wobei jedes X' unabhängig voneinander ausgewählt ist aus der Gruppe, die aus Br, Cl und F besteht, und R⁹ eine Alkylgruppe oder eine Arylgruppe ist; und jedes R¹ eine unabhängig ausgewählte halogenierte Arylgruppe ist.

3. Zusammensetzung nach Anspruch 2, wobei (i) das tetravalente Monokation des Phosphors die folgende Formel aufweist:

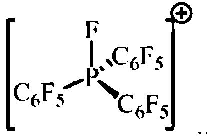

4. Zusammensetzung nach einem der Ansprüche 1 bis 3, wobei (ii) das nicht-koordinierende Anion die Formel [BR³₄]⁻ aufweist, wobei jedes R³ eine halogenierte Arylgruppe ist.

5. Zusammensetzung nach Anspruch 4, wobei (ii) das Anion die Formel B(C₆F₅)₄⁻ aufweist.

6. Zusammensetzung nach einem der Ansprüche 1 bis 3, wobei (A) der Phosphoniumkatalysator die folgende Formel aufweist:

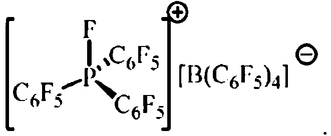

7. Zusammensetzung nach einem der Ansprüche 1 bis 6, wobei (B) das Polyorganohydrogensiloxan zwei oder mehr Siloxaneinheiten umfasst, die ausgewählt sind aus der Gruppe, die aus HR⁴₂SiO_{1/2}-, R⁴₃SiO_{1/2}-, HR⁴SiO_{2/2}-, R⁴₂SiO_{2/2}-, R⁴SiO_{3/2}-, HSiO_{3/2}- und SiO_{4/2}-Einheiten besteht; wobei jedes R⁴ eine unabhängig ausgewählte einwertige Kohlenwasserstoffgruppe ist, die frei von aliphatischer Ungesättigtheit ist.

8. Zusammensetzung nach Anspruch 7, wobei (B) das Polyorganohydrogensiloxan ausgewählt ist aus der Gruppe bestehend aus:
(B-1) einem linearen Polydiorganohydrogensiloxan, umfassend die Einheitformel (HR⁴₂SiO_{1/2})_{g}(R⁴₃SiO_{1/2})ₕ(R⁴₂SiO_{2/2})ᵢ(HR⁴SiO_{2/2})ⱼ, wobei R⁴ wie vorstehend beschrieben ist, und Indizes g, h, i und j Werte derart aufweisen, dass g ≥ 0, h ≥ 0, eine Menge (g + h) = 2 ist, i 1 ≥ 0, j ≥ 0 und eine Menge (g + j) ≥ 1 und eine Menge (i + j) in dem Bereich von 0 bis 1000 liegt;
(B-2) einem cyclischen Polydiorganohydrogensiloxan, umfassend Einheitformel (R⁴₂SiO_{2/2})ᵤ(R⁴HSiO_{2/2})ᵥ, wobei Index u 0 oder mehr ist, Index v 1 oder mehr ist, eine Menge (u + v) 3 bis 15 ist, und jedes R eine unabhängig voneinander ausgewählte einwertige Kohlenwasserstoffgruppe ist; und
(B-3) einer Kombination von sowohl (B-1) als auch (B-2).

9. Zusammensetzung nach einem der Ansprüche 1 bis 8, ferner umfassend (C) ein Polyorganosiloxan, wobei (C) das Polyorganosiloxan zwei oder mehr Siloxaneinheiten umfasst, ausgewählt aus R⁴₃SiO_{1/2}-, R⁴₂SiO_{2/2}-, R⁴SiO_{3/2}- und SiO_{4/2}-Einheiten; wobei jedes R⁴ eine unabhängig ausgewählte einwertige Kohlenwasserstoffgruppe ist, die frei von aliphatischer Ungesättigtheit ist.

10. Zusammensetzung nach Anspruch 9, wobei (C) das Polyorganosiloxan aus der Gruppe ausgewählt ist, bestehend aus
(C-1) einem linearen Polydiorganosiloxan, umfassend Einheitformel: (R⁴₃SiO_{1/2})₂(R⁴₂SiO_{2/2})ₓ, wobei R⁴ wie vorstehend beschrieben ist und 1.000 ≥ x ≥ 1;
(C-2) einem cyclischen Polydiorganosiloxan, umfassend Einheitformel: (R⁴₂SiO_{2/2})_{y}, wobei R⁴ wie vorstehend beschrieben ist und 15 ≥ y ≥ 3; und
(C-3) einer Kombination von sowohl (C-1) als auch (C-2).

11. Zusammensetzung nach einem der Ansprüche 1 bis 10, wobei eine Menge von (A) dem Phosphoniumkatalysator 1 ppm bis 1.000 ppm beträgt, bezogen auf das Gewicht von (B) dem Polyorganohydrogensiloxan und, falls vorhanden, (C) dem Polyorganosiloxan.

12. Zusammensetzung nach einem der Ansprüche 1 bis 11, ferner umfassend (D) ein Lösungsmittel.

13. Zusammensetzung nach einem der Ansprüche 1 bis 12, ferner umfassend eine oder eine Kombination von mehr als einer Komponente ausgewählt aus einer Gruppe, die aus Pigmenten, Füllstoffen, Feuchtigkeitsfängern, Fluoreszenzaufhellern, Stabilisatoren und Korrosionsinhibitoren besteht.

14. Zusammensetzung nach einem der Ansprüche 1 bis 13, wobei die Zusammensetzung frei von Übergangsmetallen ist.

15. Verfahren, umfassend die Schritte:
1) Bereitstellen einer Zusammensetzung nach einem der Ansprüche 1 bis 14 und
2) Erhitzen der Zusammensetzung auf eine Temperatur, die ausreicht, um die Reaktion von siliciumgebundenen Wasserstoffatomen in (B) dem Polyorganohydrogensiloxan zu katalysieren; und
gegebenenfalls Einbringen der Zusammensetzung in eine Form oder Aufbringen der Zusammensetzung auf ein Substrat nach Schritt 1) und vor Schritt 2).

## Revendications

1. Composition comprenant un mélange de (A) un catalyseur phosphonium comprenant (i) un monocation tétravalent de phosphore et (ii) un anion non coordonnant de formule [BR³₄]⁻, où chaque R³ est choisi indépendamment dans le groupe constitué d'un groupe hydrocarboné monovalent et d'un groupe hydrocarboné halogéné monovalent ; et (B) un polyorganohydrogénosiloxane ; dans laquelle la composition est exempte de base de Lewis.

2. Composition selon la revendication 1, où (i) le monocation tétravalent de phosphore est un cation de phosphore acide de Lewis de formule [PR¹₃R²]⁺, où chaque R² est choisi indépendamment dans le groupe constitué de X', -CX'₃, et - OR⁹, où chaque X' est choisi indépendamment dans le groupe constitué de Br, CI, et F, et R⁹ est un groupe alkyle ou un groupe aryle ; et chaque R¹ est un groupe aryle halogéné choisi indépendamment.

3. Composition selon la revendication 2, où le monocation tétravalent de phosphore (i) a la formule

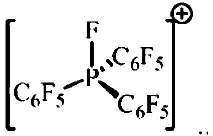

4. Composition selon l'une quelconque des revendications 1 à 3, où l'anion non coordonnant (ii) a la formule [BR³₄]⁻, où chaque R³ est un groupe aryle halogéné.

5. Composition selon la revendication 4, où l'anion (ii) a la formule B(C₆F₅)₄⁻.

6. Composition selon l'une quelconque des revendications 1 à 3, où le catalyseur phosphonium (A) a la formule :

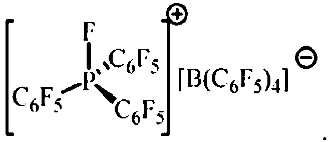

7. Composition selon l'une quelconque des revendications 1 à 6, où le polyorganohydrogénosiloxane (B) comprend deux motifs siloxane ou plus choisis dans le groupe constitué des motifs HR⁴₂SiO_{1/2}, R⁴₃SiO_{1/2}, HR⁴SiO_{2/2}, R⁴₂SiO_{2/2}, R⁴SiO_{3/2}, HSiO_{3/2} et SiO_{4/2} ; où chaque R⁴ est un groupe hydrocarboné monovalent choisi indépendamment, qui est exempt d'insaturation aliphatique.

8. Composition selon la revendication 7, où le polyorganohydrogénosiloxane (B) est choisi dans le groupe constitué de :
(B-1) un polydiorganohydrogénosiloxane linéaire comprenant la formule unitaire (HR⁴₂SiO_{1/2})_{g}(R⁴₃SiO_{1/2})ₕ(R⁴₂SiO_{2/2})ᵢ(HR⁴SiO_{2/2})ⱼ, où R⁴ est tel que décrit ci-dessus, et les indices g, h, i, et j ont des valeurs telles que g ≥ 0, h ≥ 0, une quantité (g + h) = 2, i ≥ 0, j ≥ 0, et une quantité (g + j) ≥ 1, et une quantité (i + j) vaut de 0 à 1 000 ;
(B-2) un polydiorganohydrogénosiloxane cyclique comprenant la formule unitaire (R⁴₂SiO_{2/2})ᵤ(R⁴HSiO_{2/2})ᵥ, où l'indice u vaut 0 ou plus, l'indice v vaut 1 ou plus, une quantité (u + v) vaut de 3 à 15, et chaque R est un groupe hydrocarboné monovalent choisi indépendamment ; et
(B-3) une combinaison à la fois de (B-1) et (B-2).

9. Composition selon l'une quelconque des revendications 1 à 8, comprenant en outre (C) un polyorganosiloxane, dans laquelle le polyorganosiloxane (C) comprend deux motifs siloxane ou plus choisis parmi des motifs R⁴₃SiO_{1/2}, R⁴₂SiO_{2/2}, R⁴SiO_{3/2}, et SiO_{4/2} ; où chaque R⁴ est un groupe hydrocarboné monovalent choisi indépendamment, qui est exempt d'insaturation aliphatique.

10. Composition selon la revendication 9, où le polyorganosiloxane (C) est choisi dans le groupe constitué de
(C-1) un polydiorganosiloxane linéaire comprenant la formule unitaire : (R⁴₃SiO_{1/2})₂(R⁴₂SiO_{2/2})ₓ, où R⁴ est tel que décrit ci-dessus, et 1 000 ≥ x ≥ 1 ;
(C-2) un polydiorganosiloxane cyclique comprenant la formule unitaire : (R⁴₂SiO_{2/2})_{y}, où R⁴ est tel que décrit ci-dessus, et 15 ≥ y ≥ 3 ; et
(C-3) une combinaison à la fois de (C-1) et (C-2).

11. Composition selon l'une quelconque des revendications 1 à 10, où une quantité du catalyseur phosphonium (A) est de 1 ppm à 1 000 ppm, sur la base du poids du polyorganohydrogénosiloxane (B), et lorsqu'il est présent, du polyorganosiloxane (C).

12. Composition selon l'une quelconque des revendications 1 à 11, comprenant en outre (D) un solvant.

13. Composition selon l'une quelconque des revendications 1 à 12, comprenant en outre un composant ou une combinaison de plus d'un composant choisi dans un groupe constitué de pigments, charges, piégeurs d'humidité, azurants fluorescents, stabilisants, et inhibiteurs de corrosion.

14. Composition selon l'une quelconque des revendications 1 à 13, dans laquelle la composition est exempte de métaux de transition.

15. Procédé comprenant l'étape consistant à :
1) la fourniture d'une composition selon l'une quelconque des revendications 1 à 14, et
2) le chauffage de la composition à une température suffisante pour catalyser une réaction d'atomes d'hydrogène liés à du silicium dans le polyorganohydrogénosiloxane (B) ; et
la mise en place facultative de la composition dans un moule ou l'application de la composition sur un substrat après l'étape 1) et avant l'étape 2).
